# DEMANDE DE BREVET EUROPEEN

(11) **EP 1 382 483 A1**
(43) Date de publication de la demande: **21.01.2004**
(21) Numéro de dépôt: 03291563.9
(22) Date de dépôt: 25.06.2003
(51) Int. Cl.: B60N 3/04, D05C 17/02

(54) **Flan thermoformable à tuftage carré**

(30) Priorité: 03.07.2002 FR 0208322
(71) Demandeur: Centre d'Etude et de Recherche pour l'Automobile ( CERA), 51100 Reims (FR)
(72) Inventeur: Mervaille, Dominique, 51430 Tinqueux (FR); Cagneaux, Frédéric, 02680 Fontaine les Clercs (FR); Luillier, Laurence, 51100 Reims (FR)
(74) Mandataire: Geismar, Thierry

(57) **Abrégé**

L'invention concerne un flan thermoformable (1) du type comprenant, associées l'une sur l'autre, une nappe textile tuftée (2) et une couche de matériau thermoformable (3), les touffes (4) étant formées sur la surface libre (5) de la nappe (2), ledit flan (1) étant caractérisé en ce que, sur la nappe textile tuftée (2), le nombre de points en serrage est sensiblement égal au nombre de points en jauge.

L'invention concerne également un procédé de réalisation d'un tel flan ainsi qu'un tapis de véhicule automobile comprenant un tel flan, une fois thermoformé.

## Description

L'invention concerne un flan thermoformable comprenant une nappe textile tuftée, un procédé de réalisation d'un tel flan et un tapis d'habitacle de véhicule automobile comprenant un tel flan thermoformé.

La technique de tuftage, ou touffetage, qui consiste en la formation de touffes sur la surface d'une nappe textile, est particulièrement adaptée pour la réalisation de tapis d'habitacles de véhicules automobiles. En effet, la présence de touffes donne un aspect avantageux au tapis, et ce à moindre coût.

A cet effet, la nappe textile tuftée est associée à une couche de matériau thermoformable pour former un flan qui est thermoformé à la géométrie que doit recouvrir le tapis.

Il est connu de tufter des nappes textiles en faisant défiler la nappe sous au moins un banc d'aiguilles d'une machine à tufter, de sorte à obtenir des nappes textiles tuftées dans lesquelles le nombre de points de serrage, c'est-à-dire dans le sens de défilement de la nappe, est supérieur au nombre de points en jauge, c'est-à-dire dans le sens perpendiculaire au sens de défilement de la nappe.

En effet, la présence d'un plus grand nombre de points de serrage permet de favoriser un sens marqué du couchant du poil formant les touffes.

Toutefois, dans l'utilisation particulière de telles nappes pour la réalisation de flans, on observe, après thermoformage, un phénomène de moirage dans les zones les plus déformées où les poils sont contrariés, ce qui nuit à l'aspect général du tapis.

En outre, une fois que le tapis comportant un tel flan est mis en place dans le véhicule, on observe que les zones de la nappe dans lesquelles les poils sont plus serrés accompagnent le relief des zones de l'habitacle de façon peu satisfaisante, du fait que ces poils sont bloqués, ce qui nuit à l'ajustement du tapis dans le véhicule.

La demanderesse a effectué des essais intensifs pour tenter de remédier à ces inconvénients et a constaté, de façon surprenante, qu'en utilisant une répartition sensiblement isotrope des touffes, on obtient un flan thermoformé d'aspect amélioré.

Ce caractère isotrope est obtenu en imposant, lors de la formation de la nappe textile tuftée, un nombre de points de serrage égal au nombre de points de jauge.

Ceci confère en outre au poil un couchant moins marqué.

Les tapis comportant de tels flans accompagnent de façon optimale le relief des zones de l'habitacle du véhicule automobile, et, bien que la densité de boucles soit moins importante, ces tapis sont d'aspect très satisfaisant.

La réalisation d'une nappe textile tuftée selon l'invention présente l'avantage de permettre un gain en masse de fil pour une surface équivalente, par rapport aux nappes réalisées de façon connue, et d'augmenter la vitesse de production grâce à un défilement de la nappe plus rapide, à vitesse de frappe des aiguilles constante.

En outre, de par le caractère isotrope de la répartition des touffes, une telle nappe permet de s'affranchir des contraintes antérieures de mise en place du tapis dans le véhicule, liées à l'orientation desdites touffes. En effet, le tapis suivant l'invention peut être disposé dans le véhicule indépendamment du sens de formation de la nappe, soit en sens long soit en sens travers.

A cet effet, et selon un premier aspect, l'invention concerne un flan thermoformable du type comprenant, associées l'une sur l'autre, une nappe textile tuftée et une couche de matériau thermoformable, les touffes étant formées sur la surface libre de la nappe avec un nombre de points en serrage sensiblement égal au nombre de points en jauge.

Selon un mode de réalisation, la surface de la nappe dépourvue de touffes est enduite avec une couche de liant, par exemple formée de latex.

Selon un deuxième aspect, l'invention concerne un procédé de réalisation d'un tel flan thermoformable, ledit procédé comprenant les étapes prévoyant de :
- former une nappe textile ;
- faire défiler la nappe sous au moins un banc d'aiguilles d'une machine à tufter, chaque aiguille étant alimentée par au moins un fil pour former simultanément, sur la surface libre de la nappe, des boucles dans le sens de défilement de la nappe et dans le sens perpendiculaire au défilement de la nappe de telle sorte que le nombre de points en serrage, dans le sens de défilement de la nappe, soit égal au nombre de points en jauge, dans le sens perpendiculaire au sens de défilement de la nappe ;
- former les touffes par coupure des boucles ;
- enduire la surface de la nappe dépourvue de touffes avec une couche de liant ;
- associer la couche thermoformable et la nappe textile tuftée.

Selon un troisième aspect, l'invention a pour objet un tapis d'habitacle de véhicule automobile comprenant un tel flan thermoformable, ledit flan ayant été thermoformé.

D'autres objets et avantages de l'invention apparaîtront au cours de la description qui suit, faite en référence aux dessins annexés dans lesquels :
- la figure 1 est un schéma montrant la disposition des différentes couches formant un tapis d'habitacle de véhicule automobile selon l'invention, ledit tapis comprenant successivement une nappe textile tuftée, une couche de liant, une couche de matériau thermoformable et un support ;
- la figure 2 est une vue schématique agrandie de dessus d'une partie d'une nappe textile tuftée montrant la répartition isotrope des touffes.

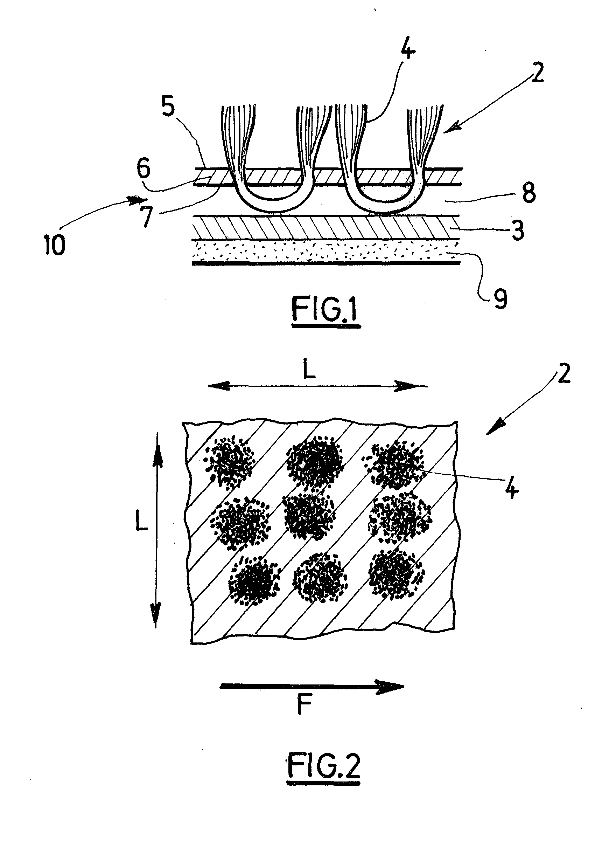

L'invention concerne un flan thermoformable 1 du type comprenant, associées l'une sur l'autre par tous moyens adéquats, une nappe textile tuftée 2, telle que représentée sur la figure 1, et une couche de matériau thermoformable 3.

Selon une réalisation, la couche de matériau thermoformable 3 est formée d'un polymère thermoplastique. Ce polymère peut être du type EPDM (éthylène-propylène-diène monomère) ou PVC, et peut comprendre une poudre de type EVA ou polyéthylène permettant d'améliorer l'association à la nappe textile préenduite.

Le matériau thermoformable peut en outre être chargé avec une charge minérale telle que du sulfate de baryum, du carbonate de calcium et/ou de l'hydroxyde de baryum.

Les touffes 4 de la nappe textile tuftée 2 sont formées sur la surface libre 5 de la nappe 2, c'est-à-dire sur la surface qui n'est pas en regard de la couche de matériau thermoformable 3.

Selon l'invention, sur la nappe textile tuftée 2, le nombre de points en serrage est sensiblement égal au nombre de points en jauge, chaque point correspondant à une touffe 4.

On obtient ainsi une nappe 2 dont les touffes 4 sont réparties, sur une surface donnée, selon un carré. En effet, le nombre de touffes 4 réparties sur une longueur L dans le sens de défilement de la nappe 1 (selon la flèche F sur la figure 2) est égal au nombre de touffes 4 réparties sur la même longueur L dans une direction perpendiculaire au sens de défilement de la nappe 2.

Selon un exemple particulier, le nombre de points en serrage et le nombre de points en jauge est sensiblement égal à 40 points pour 10 centimètres, avec la tolérance habituelle dans ce type de technologie qui est égale à plus ou moins deux points, cette nappe étant obtenue sur une machine à tufter de type « CUT », et de jauge égale à 1/10^{e}, cette valeur correspondant à l'écart entre deux aiguilles du métier à tufter.

Selon d'autres exemples, les machines à tufter utilisées peuvent être de jauge égale à 1/8^{e}, 5/32^{e} ou 5/64^{e}, avec un nombre de points en serrage et en jauge respectivement égal à 31,5, 25,2 et 50,4.

On décrit ci-dessous un procédé de réalisation d'un flan thermoformable 1 comprenant une telle nappe 2.

La nappe de textile est tuffée au moyen d'une machine à tufter de type connu. Cette machine comprend notamment un banc d'aiguilles sur lequel chaque aiguille est alimentée par au moins un fil.

Pour obtenir une nappe textile tuftée 2, une nappe textile 6 est amenée sur la machine à tufter, et est déplacée sous le banc d'aiguilles par des moyens de défilement adéquats.

La nappe textile 6 a été formée préalablement de façon connue, avec des caractéristiques techniques adaptées en fonction de son utilisation finale.

Cette nappe 6 peut être formée d'une couche de non-tissé, par exemple en polyester ou en un mélange polyester/polypropylène.

Le procédé de tuftage de la nappe consiste classiquement en l'action des aiguilles au travers de la nappe textile 6, chaque aiguille étant alimentée par au moins un fil de sorte à former simultanément, sur une surface de ladite nappe 6, des boucles de fil dans le sens de défilement de la nappe et dans le sens perpendiculaire au défilement de la nappe, le défilement de la nappe 6 permettant d'obtenir des boucles sur la totalité de la surface de la nappe à tufter.

Le fil utilisé est avantageusement formé de fibres continues, de type BCF.

En variante, le fil peut être formé de fibres discontinues, de type filé de fibres.

Selon l'invention, on forme des boucles de telle sorte que le nombre de points en serrage, c'est-à-dire dans le sens de défilement de la nappe, soit égal au nombre de points en jauge, c'est-à-dire dans le sens perpendiculaire au sens de défilement de la nappe.

Pour améliorer l'aspect de la surface 5 pourvue de boucles de la nappe textile, les boucles situées sur ladite surface 5 sont ensuite coupées de sorte à obtenir des touffes 4 qui donnent à la surface de la nappe un aspect velours, tel que représenté sur la figure 1. On obtient ainsi une nappe textile tuftée 2.

L'autre surface 7 de la nappe textile tuftée 2 est généralement enduite avec une couche de liant 8, par exemple formée de résine SBR éventuellement chargée avec une charge minérale, destinée à améliorer la tenue des touffes 4 sur la surface 5.

Puis la couche de matériau thermoformable 3 et la nappe textile tuftée 2 sont associées, par tous moyens adéquats, de sorte à former le flan thermoformable 1.

Selon une réalisation, on peut prévoir, préalablement à l'étape d'enduction, une étape de rasage des touffes 4 permettant d'égaliser leur hauteur, de sorte à améliorer l'aspect du produit fini.

On peut également prévoir, préalablement à l'étape d'enduction, une étape supplémentaire consistant à humidifier et à traiter thermiquement les touffes 4, en les chauffant. Cette étape favorise non seulement le maintien des touffes 4 dans leurs logements respectifs, mais également l'enduction de la nappe 2 par la couche de liant 8, l'humidification facilitant la montée du matériau liant sur les touffes 4 par capillarité.

Le flan 1, une fois thermoformé, peut être associé à un support 9 par exemple en mousse ou en feutre afin de réaliser un tapis 10 d'habitacle de véhicule automobile possédant à la fois une fonction esthétique et une fonction d'isolation acoustique.

L'association des différentes couches formant un tel tapis 10 est représentée de façon schématique sur la figure 1. Ce tapis 10 comprend successivement, de bas en haut, une couche de support 9, une couche de matériau thermoformable 3, une couche de liant 8 de type résine SBR éventuellement chargée et une nappe textile tuftée 2.

Grâce à la présence d'une nappe textile tuftée 2 dont la répartition des touffes 4 présente un caractère isotrope, le tapis 10, une fois mis en place dans le véhicule, accompagne de façon optimale le relief des différentes zones de l'habitacle, telles que la zone de tunnel, située entre les sièges, ou les zones situées sous les sièges. En outre, ce tapis 10 ne présente pas de zones moirées.

En effet, du fait de la répartition isotrope des touffes, la capacité d'allongement du flan dans le sens de serrage est améliorée lors du thermoformage.

Par ailleurs, le tapis 10, bien que possédant une densité de touffes 4 plus faible que les tapis connus, est d'aspect très satisfaisant.

Par ailleurs, le gain en masse de fil pour une surface équivalente est important. Par exemple, dans le mode de réalisation selon lequel le nombre de points en serrage et le nombre de points en jauge est sensiblement égal à 40 points pour 10 centimètres, obtenus sur une machine à tufter de jauge égale à 1/10^{e}, le gain obtenu est d'environ 25%.

## Revendications

1. Flan thermoformable (1) du type comprenant, associées l'une sur l'autre, une nappe textile tuftée (2) et une couche de matériau thermoformable (3), les touffes (4) étant formées sur la surface libre (5) de la nappe (2), ledit flan (1) étant **caractérisé en ce que**, sur la nappe textile tuftée (2), le nombre de points en serrage est sensiblement égal au nombre de points en jauge.

2. Flan selon la revendication 1, **caractérisé en ce que** le nombre de points en serrage et le nombre de points en jauge est sensiblement égal à 40 points pour 10 centimètres, obtenus sur une machine à tufter de jauge égale à 1/10^{e}.

3. Flan selon la revendication 1 ou 2, **caractérisé en ce que** la surface (7) de la nappe (2) dépourvue de touffes est enduite avec une couche de liant (8), par exemple formée de résine SBR éventuellement chargée avec une charge minérale.

4. Flan selon l'une quelconque des revendications 1 à 3, **caractérisé en ce que** la nappe (2) comprend une couche de non-tissé.

5. Flan selon l'une quelconque des revendications 1 à 4, **caractérisé en ce que** le fil formant les touffes (4) est formé de fibres continues, de type BCF.

6. Flan selon l'une quelconque des revendications 1 à 4, **caractérisé en ce que** le fil formant les touffes (4) est formé de fibres discontinues, de type filé de fibres.

7. Flan thermoformable selon l'une quelconque des revendications 1 à 6, **caractérisé en ce que** la couche de matériau thermoformable (3) est chargée avec une charge minérale.

8. Procédé de réalisation d'un flan thermoformable (1) selon l'une quelconque des revendications 3 à 7, **caractérisé en ce qu'**il comprend les étapes prévoyant de :
- former une nappe textile (6) ;
- faire défiler la nappe (6) sous au moins un banc d'aiguilles d'une machine à tufter, chaque aiguille étant alimentée par au moins un fil pour former simultanément, sur la surface libre (5) de la nappe (6), des boucles dans le sens de défilement de la nappe (6) et dans le sens perpendiculaire au défilement de la nappe (6) de telle sorte que le nombre de points en serrage, dans le sens de défilement de la nappe (6), soit égal au nombre de points en jauge, dans le sens perpendiculaire au sens de défilement de la nappe (6) ;
- former les touffes (4) par coupure des boucles ;
- enduire la surface (7) de la nappe (2) dépourvue de touffes avec une couche de liant (8) ;
- associer la couche thermoformable (3) et la nappe textile tuftée (2).

9. Procédé selon la revendication 8, **caractérisé en ce que**, préalablement à l'étape d'enduction, une étape de rasage des touffes (4) est prévue.

10. Procédé selon la revendication 8 ou 9, **caractérisé en ce que**, préalablement à l'étape d'enduction, une étape d'humidification et de traitement thermique des touffes (4) est prévue.

11. Tapis (10) d'habitacle de véhicule automobile, **caractérisé en ce qu'**il comprend un flan thermoformable (1) selon l'une quelconque des revendications 1 à 7, ledit flan (1) ayant été thermoformé.

12. Tapis selon la revendication 11, **caractérisé en ce qu'**il comprend en outre, associé au flan (1), un support (9) par exemple en mousse ou en feutre.
